# EUROPEAN PATENT SPECIFICATION

(11) **EP 1 340 401 B1**
(45) Date of publication and mention of the grant of the patent: **02.07.2008**
(21) Application number: 01980661.1
(22) Date of filing: 30.10.2001
(51) Int. Cl.: H04Q 7/38, H04M 3/58

(54) **CALL PROCESSING METHOD AND TERMINAL**
VERFHARHEN UND TERMINAL ZUR ANRUFVERARBEITUNG
PROCEDE ET TERMINAL POUR LE TRAITEMENT D'APPEL

(30) Priority: 08.12.2000 GB 0030049
(43) Date of publication of application: 03.09.2003
(60) Divisional application: 08152812.7
(73) Proprietor: Orange Personal Communications Services Ltd., Bradley Stoke BS32 4QJ (GB)
(72) Inventor: CROOK, Michael David Stanmore, Monmouthshire NP26 4QH (GB)
(74) Representative: Spaargaren, Jerome
(86) International application number: PCT/GB2001/004824
(87) International publication number: WO 2002/047418

(56) References cited:
- EP-A- 0 529 721
- EP-A- 0 982 919
- EP-A- 1 017 210
- WO-A-01/43459
- US-A- 5 371 781
- US-A- 5 570 413
- US-A- 6 069 896
- "10 CHANNEL CONTROL" BLUETOOTH SPECIFICATION VERSION, XX, XX, 29 November 1999 (1999-11-29), pages 95-126, XP002937254

## Description

This invention relates to methods and apparatus for providing services in a mobile communications network. More particularly, but not exclusively, it relates to a method and system to provide call handling facilities, such as call pickup, and/or service management functions, in a mobile communications network.

Systems providing facilities like call pickup enabling calls to be answered by stations other than those to which they are directed are well known in fixed-line private branch exchange systems (PBX).

A user, referred to as a "picker" in the following, dials a particular code in response to hearing another user's station ringing and thus initiates redirection of the call from the called party's telephone station to the picker's station. Two different services, the "directed call pickup" and "group call pickup", are known and commonly available.

For "directed call pickup" the picker dials a code followed by the called party's telephone number to pick up the call directed to the calling party's telephone station. For the "group call pickup" service groups of users have been preconfigured and a member of such a group may pickup calls directed to any other member of the same group. In this case the picker dials a generic code (for example, "8") to pick up a call directed to the group member's stations. With this service employees for example may conveniently handle calls directed to colleagues.

US 3737587 for example describes such a telephone switching system providing group pickup service.

EP 982919 describes a call pickup system and apparatus to be implemented in a communications network having more than one server. The multi-server call pickup system is adapted to enable call pickup from anywhere within the network, including calls to users located on a different server within the multi-server network. The call pickup system includes a pickup request unit that is used for initiating the call pickup feature. A remote connect unit and a local connect unit determines the locations of the call participants within the network.

WO 01/43459, which forms part of the prior art under Art 54(3) EPC only discloses a call pick-up system in which the transfer of an in-progress call can be effected from a wireless telephone to a fixed-line telephone. To initiate the handover the wireless telephone issues a call transfer request toa cellular base station, passing the wired telephone's phone number. The base station and the network then re-route the call to the wired telephone.

It is a disadvantage of the systems and methods described above that they provide solutions for fixed-line telecommunications networks only. It is an object of the present invention to provide a method and system for implementing facilities such as call pickup and other facilities relating to bearer services (including telephony, text messaging, etc) in a mobile telecommunications network.

The mobility of the handsets in a cellular communications network imposes technical difficulties for the provision of many services as for example the call pickup service. If for example a subscriber hears the ringing of a mobile station nearby, he or she may not know which mobile station is ringing. This problem arises if at least one of the user terminals being involved in the provision of such a service is mobile. The environment in the vicinity of the first user with a fixed device may change because other users with mobile terminals move into or out of the vicinity of the first user. In the same manner the environment of a user of a mobile terminal changes because the user may move into or out of the vicinity of other users of the cellular communications network. In addition the user may not know if he or she is in a position to answer the call. Answering a call for a third party may be reasonable in case that the called party is unavailable and the third party belongs to a group related to the called party and may, on the other hand, be disadvantageous if the third party would not be able to help the calling party by answering the call.

According to one aspect of the present invention, there is provided a user terminal according to claim 1.

In this way a user terminal may identify a device in its vicinity and control of a bearer service and/or a service management setting and/or other functions may be initiated such that the identified device is involved.

According to another aspect of the present invention, there is provided a method of processing a telephone call in a mobile telecommunications network, according to claim 16.

A call may thus for example be passed to a user terminal which is, or was, located in the vicinity of the called party's user terminal.

Further aspects and advantages of the invention will be apparent from the following description and accompanying drawings, wherein
Figure 1 is a schematic block diagram of a mobile communications network;
Figure 2 is a diagram showing communications between mobile stations and mobile switching centres for providing a pickup service according to one embodiment of the present invention;
Figure 3A is a schematic diagram illustrating the short-range radio communications between mobile stations for a directed pickup service according to a further embodiment of the present invention;
Figure 3B is a schematic diagram illustrating the short-range radio communications between mobile stations for a group pickup service according to a further embodiment of the present invention;
Figure 4 is a diagram showing communications between mobile stations, mobile switching centres and service control points for providing a pickup service according to yet a further embodiment of the present invention; and
Figure 5 is a diagram showing communications between mobile stations and mobile switching centres for providing a call diversion service according to still a further embodiment of the present invention.

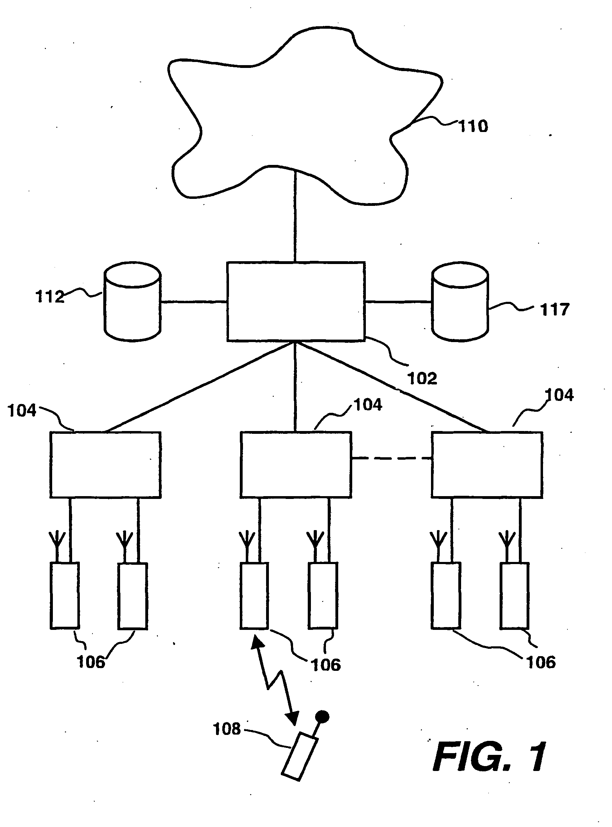

A cellular communications network, referred to as a public land mobile network (PLMN), is schematically illustrated in Figure 1. This is in itself known and will not be described in detail. A mobile switching centre (MSC) 102 is connected via communication links to a number of base station controllers (BSCs) 104. The BSCs 104 are dispersed geographically across areas served by the mobile switching centre 102. Each BSC 104 controls one or more base transceiver stations (BTSs) 106 located remote from, and connected by further communication links to, the BSC. Each BTS 106 transmits radio signals to, and receives radio signals from, mobile stations 108 which are in an area served by that BTS. That area is referred to as a "cell". A GSM network is provided with a large number of such cells, which are ideally contiguous to provide continuous coverage over the whole network territory.

A mobile switching centre 102 is also connected via communications links to other mobile switching centres in the remainder of the mobile communications network 110, and to other networks such as a public service telephone network (PSTN), which is not illustrated. The mobile switching centre 102 is provided with a home location register (HLR) 112 which is a database storing mobile terminating call routing data, subscriber authentication data and service data.

The mobile switching centre is also provided with a visitor location register (VLR), which is generally integrated with the MSC and therefore not shown in Figure 1, which is a database temporarily storing subscriber authentication data and service data for mobile stations active in its area.

The network is also provided with an IMEI/IMSI register (IIR) 117, which is a database holding a list of International Mobile Subscriber Identities (IMSIs) belonging to Subscriber Identity Modules (SIMs) held by subscribers of the network, and against each IMSI record, a record of the International Mobile Equipment Identity (IMEI) of the user station, which includes an equipment type code defining the model of the equipment used and in which the SIM was last known to be inserted.

In the present invention user terminals which are in the vicinity of another user terminal are identified by a short-range wireless communications interface, such as for short-range radio infrared transfer, etc. User terminals may thus communicate with other stations which are within the range of the communications link used and may for example transmit an identifier number for identification or a request for redirecting a call or carrying out other functions in response to the identification process.

In one embodiment the invention is applied in order to implement a call pickup service in a mobile communications network. If a subscriber hears a ringing phone he or she may like to answer the call and initiates the transmission of a message containing an offer to pick up the call. The subscriber's mobile station transmits a message to mobile stations in its vicinity via the short-range communications interface enquiring which station is ringing, i.e. which station has received a call set-up request. The ringing station may then respond to this enquiry by transmitting its identification number (as for example the IMSI). The subscriber's MS then requests completion of the pickup service from the called MS via a short-range radio link.

In other embodiments of the present invention the called party's mobile station may identify other mobile stations in its vicinity via the short-range communications interface. In this way facilities like call divert, call transfer or conference calls may be provided to mobile stations in the vicinity of the called party's MS in a mobile communications network.

### Bluetooth^{™}

In the following the Bluetooth technology is introduced as an example of a suitable short-range radio connection to implement the present invention.

The Bluetooth technology provides an universal radio interface in the globally available 2.45 GHz frequency band and enables wireless connection and communication between electronic devices within a 10 meter radius (and extendable to up to 100 meters). Simultaneous voice and data transmission is supported over both half- and full-duplex connections.

The Bluetooth-enabled unit includes a radio unit, a link control unit, and a support unit for link management and host terminal interface functions.

The Bluetooth system provides a point-to-point connection or a point-to-multipoint connection. In the point-to-multipoint connections, the channel is shared among several Bluetooth units.

In the Bluetooth system, an enquiry procedure is defined which is used in applications where the destination's device address is unknown to the source, or alternatively, the enquiry procedure can be used to discover which other Bluetooth units are within range. During an enquiry substate, the discovering unit collects the Bluetooth device addresses and clocks of all units that respond to the enquiry message. It can then, if desired, make a connection to any one of them by means of the so-called page procedure.

The enquiry message broadcasted by the source does not contain any information about the source. However, it may indicate which class of devices should respond. There is one general enquiry access code (GIAC) to enquire for any Bluetooth device, and a number of dedicated enquiry access (DIAC) that only enquire for a certain type of devices. The enquiry access codes are derived from reserved Bluetooth device addresses.

Each packet starts with an access code. If a packet header follows the access code is 72 bits long, otherwise the access code is 68 bits long. In the enquiry procedure the access code is used as a signalling message and neither a header not a payload is present.

A unit that wants to discover other Bluetooth units enters an enquiry substate. In this substate, it continuously transmits the enquiry message at different hop frequencies. A unit that allows itself to be discovered, regularly enters the enquiry scan substate to respond to enquiry messages.

When the enquiry message is received in the enquiry scan substate, a response message containing the recipient's address must be returned. An FHS packet is transmitted as a response, which is a special control packet revealing, among other things, the Bluetooth device address and the clock of the sender.

Subsequently a connection may be established via the CONNECTION state and packets can be sent back and forth. Only the Bluetooth device address is required to set up a connection. Knowledge about the clock will accelerate the setup procedure.

The first information packets in the CONNECTION state contain control messages that characterise the link and give more details regarding the Bluetooth units. These messages are exchanged between the link managers of the units. Then the transfer of user information can start by alternately transmitting and receiving packets.

The CONNECTION state is left through a detach or reset command. The detach command is used if the link has been disconnected in the normal way. All configuration data in the Bluetooth link controller is still valid. The reset command is a hard reset of all controller processes. After a reset, the controller has to be reconfigured.

The above described Bluetooth technology or another short-range wireless communications technology is used together with systems to control call processing or a service management function in order to implement the present invention. In the accompanying drawings, dashed arrows are used to indicate messages sent via the short range communications interface, whilst solid arrows are used to indicate signalling messages sent into or from the network, over the cellular radio interface, and within the network itself.

### Pickup Service

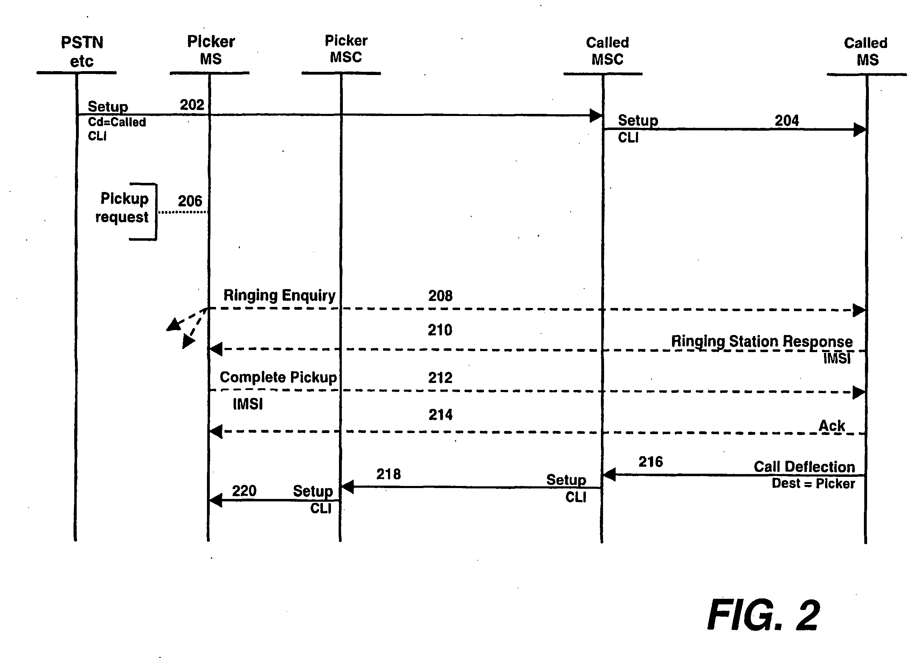

In a first embodiment of the present invention call pickup is provided by redirecting the call by using the GSM supplementary service "call deflection". In the following reference is made to Figure 2, wherein communications between the mobile stations and mobile switching centres are shown.

In a first step a call is set up from a calling party's telephone station to the called party's station in step 202 and 204. The call could either originate from a cellular communications network or any other telephone network as for example a PSTN. The call is set up via the MSC serving the called party as described above and sets the called party's station ringing. A user in the vicinity of the called party's mobile station hears a mobile station ringing may then answer the call using the call pickup procedure of the present embodiment. In order to initiate call pickup (step 206) he or she conducts a man-machine interface interaction, for example activates a particular key or enters a predetermined code, on his or her mobile station. The picker's mobile station then sends a short-range radio message to enquire about ringing mobile stations nearby (step 208).

The enquiry procedure is limited to a predefined area by the range of the short-range radio interface. As described above the range of a Bluetooth communication is usually restricted to an area of 10m radius, but may be extended, for example, with an additional power amplifier, if a greater range is required. The enquiry may be a general enquiry as used in a directed pickup procedure or an enquiry to members of a preconfigured group for a group pickup process as will be explained in more detail below. The called party's mobile station may then respond to the picker's enquiry with a short-range radio message in step 210, signalling that it is ringing and transmitting its IMSI for identification. In a further short-range link message in step 212 the picker's mobile station transmits a request for completion of the pickup service called party's to the picker's station. In this request the details about the picker's mobile station for redirecting the call like the picker's IMSI number are transmitted to the called party's station. If Bluetooth is used this will be carried out after a connection via the connection state is established between the picker's and the called party's mobile stations.

In step 214 the called party's station acknowledges the request in a further radio message to the picker's station. The call is then redirected to the MSC serving the called party's station by the use of Call Deflection where the IMSI number of the picker's mobile station is given as the destination. The call is then set up from the called party's MSC via the MSC serving the picker's station to the picker's mobile station is steps 218 and 220.

Instead of call deflection other supplementary services like call transfer may be used to redirect the call from the called party's mobile station to the picker's station.

The calling line identification (CLI) number may be transmitted to the picker's mobile station as will be described in the following. In steps 202 and 204 the CLI of the calling party's telephone station is transmitted via the MSC to the mobile station of the called party. CLI may be transmitted from the called party's mobile station to the picker's station via short-range radio link in step 214. The CLI is already known at the MSC serving the called party for transmission in step 202 and, alternatively, may thus be transmitted in the call setup via the MSC serving the picker's station to the picker's mobile station in step 218 and 220. The CLI may be transmitted in a similar manner to a picker's or third party's mobile station in the embodiments described below.

In the embodiment described, a ringing enquiry is sent by the picker's mobile station in order to request identification of the ringing mobile station. In an alternative embodiment, the ringing mobile station may, whilst alerting via normal functions like audible tones, display of an alert message or vibrating, also alert via a broadcast short range radio channel with its identity. This broadcast alert may be periodically repeated and may time out, to take account of mobile stations moving in and out of the broadcast area. Other mobile stations receiving the alert may themselves begin alerting via normal functions like audible tones, display of an alert message or vibrating. A picker mobile station, in response to user interaction, will then transmit a "complete pickup message", and the remaining procedures illustrated in Figure 2 may then occur. It should be noted that this variant may also be used in all further embodiments described below.

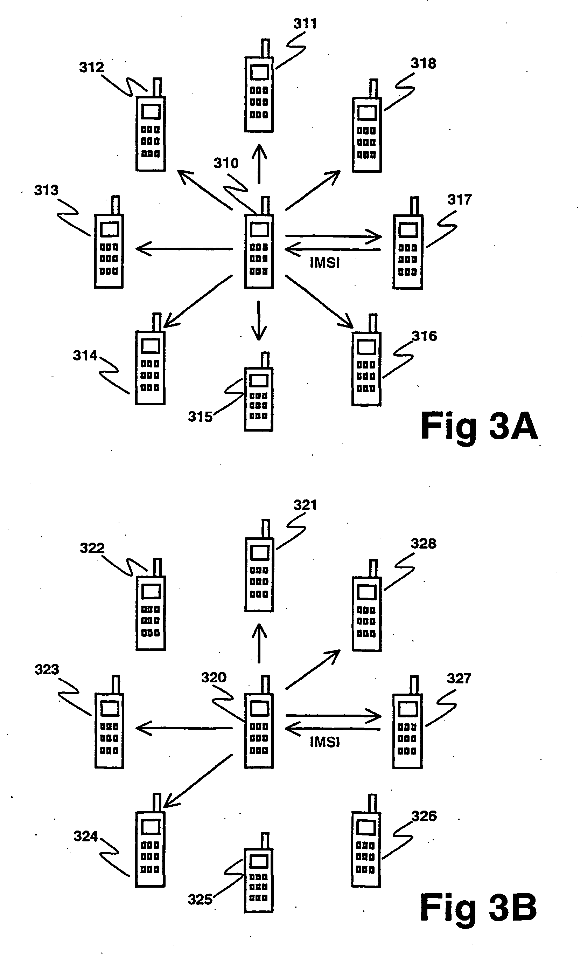

In the following and with reference to Figure 3A and 3B the implementation of the described embodiment as a "directed pickup" or "group pickup" service, respectively, is described.

In Figure 3A the picker's mobile station 310 and other mobile stations 311 to 318 located in the vicinity and thus within the range of the short-range radio link are shown. The enquiry message as described in step 208 above is sent via radio links to all mobile stations within the range of the radio link, or to a selected one in the case of directed pickup. According to step 210 the enquiry about ringing stations is answered via radio link by the called party's station 317. The IMSI number of the called party may be transmitted to the picker's station 310 in this communication.

In Figure 3B the picker's station 320 and other mobile stations 321 to 328 are shown. The enquiry message is sent in a group pickup service to mobile stations belonging to a preconfigured group. In this example stations 321, 323, 324, 327 and 328 are recognised to belong to the same group as the picker's station 320. The full list of the group members may for example be stored on all stations belonging to the group. Alternatively, the picker's station may send a short message to a short message entity in the network storing service data for the subscriber, to enquire about an up-to-date list of the group members. Again the called party station 327 responds as the ringing mobile station and transmits the IMSI by radio communication.

In the following a further embodiment of the invention is described whereby the call flow may be controlled using an intelligent network (IN) service control function in the mobile communications network, instead of or in addition to using the existing supplementary services as described above.

In this embodiment a group pickup service is described. The MSC receiving a mobile-originated or PSTN-originated call is IN-enabled, thereby operating as an IN service switching function (SSF) which interacts by the passing of information flows (IFS) with an IN service control function (SCF) which in this embodiment is realised in a service control point (SCP). The SCP communicates with the MSC using intelligent network protocols, such as those defined in Core INAP, European Telecommunications Standards Specification ETS 300 374-1. A description of Intelligent Network concepts and functionalities may be found in "Intelligent Networks: Basic Technology, Standards and Evolution", Magedanz and Popescu-Zeletin, International Thomson Computer Press 1996.

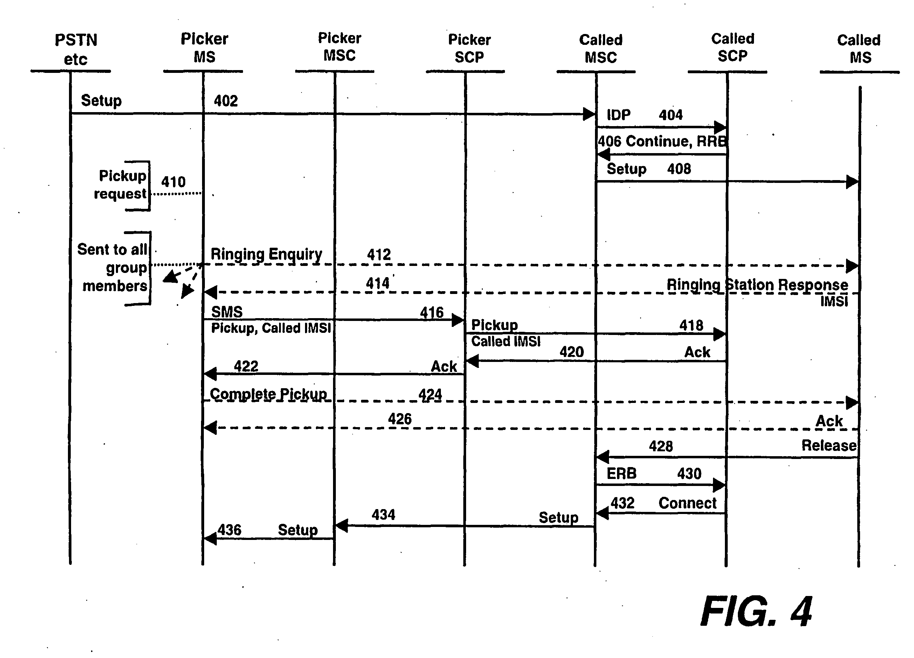

In order to describe the call flow according to this embodiment, reference is made to Figure 4 in the following.

In step 402 the call is set up from the calling party's telephone station to the MSC serving the called party. According to this embodiment, the SCP has to be informed about all terminating calls to members of the group. The initial call is directed to the called party's station and the MSC thus transmits an information flow in the form of an initial DP message to the SCP informing about the call in step 404. The SCP responds with a continue and RRB (request report BCSN, wherein BCSM is the basic call state model) message in step 406, instructing the MSC serving the called party to continue and to inform the SCP when the call is answered or terminated for any reason. The call is then setup to the called party's MS in step 408. The pickup request (step 410), the enquiry about ringing mobile stations (step 412) and the response (step 414) are carried out in the same manner as described above in steps 206, 208 and 210. The picker's MS then sends a short message (SMS) to the SCP serving the picker's station informing about the pickup request and transmitting the called party's IMSI in step 416. The message is subsequently passed to the SCP serving the called party using intelligent network protocols in step 418. Acknowledging messages are passed to the picker's SCP and mobile station in step 420 and 422. In addition, the picker is registered (for example via the picker's IMSI number) at the called party's SCP, by steps 418 and 420 such that a connection to the picker's MS may be established at a later stage. The communication via short-range radio link to request completion of the pickup service and its acknowledgment in steps 424 and 426 are equivalent to steps 212 and 214 described above. In step 428 the called party's MS releases the call to the MSC by specifying the reason. In step 430 the MSC responds to the RRB of step 406 with an ERB (event report BCSM) notifying the SCP about the release of the call and the according reason. The SCP serving the called party's intercepts the release process in step 432 and instructs the MSC to connect the call to picker's MS as registered in steps 418 and 420. The call is subsequently set up to the picker's MS via the MSC in steps 434 and 436.

In the above-described embodiment, once a pickup decision has been made, control is held at the picker's mobile station. In an alternative embodiment, control may be held at the called mobile station. In this alternative embodiment, steps 416 to 426 are replaced by the transmission of an SMS message from the called mobile station to the called party SCP, containing an identity (MSISDN or IMSI) of the proposed picker MS, which SCP transmits an acknowledgement back. A picker SCP does not in this embodiment participate.

### Other Supplementary Services

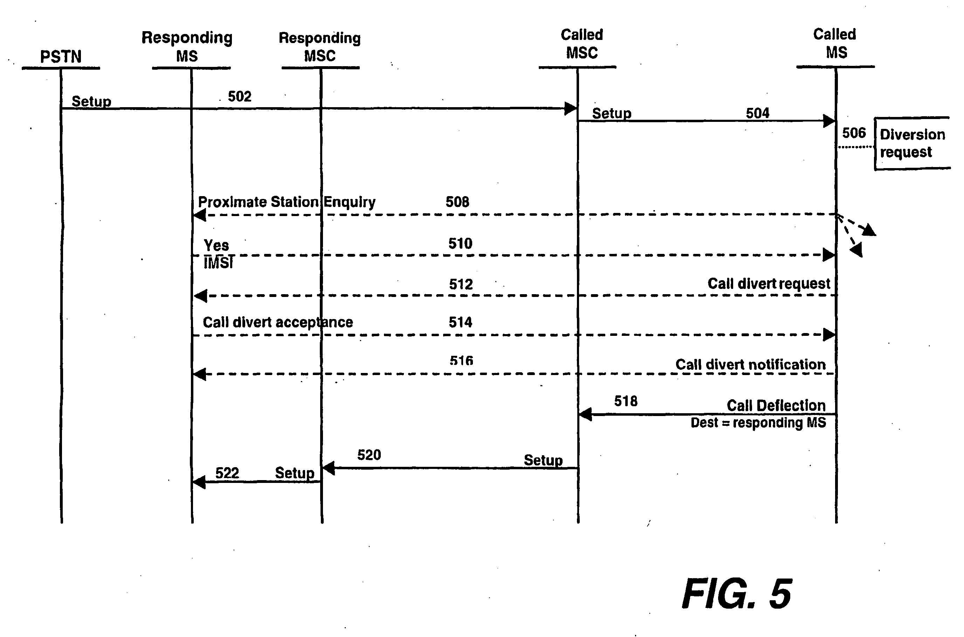

In the following a further embodiment of the invention is described wherein short-range radio technology is used to implement supplementary services like call divert, call transfer or conference calls in mobile communications systems. Referring to Figure 5, a call diversion service is described wherein the call flow is redirected using the supplementary service call deflection as an example.

In steps 502 and 504 the call is set up from the calling party's telephone station via the MSC to the called party's MS. If the call is not answered, for example because the called party's MS is busy, the MS may request call diversion in step 506. The station the sends a short-range radio message to enquire if other mobile stations are within the range of the radio technology in step 508. This enquiry message may be directed to all mobile stations or to stations of group members only as described above with reference to Figure 3A and 3B. A mobile station in an on-hook state and in a reachable condition receiving the enquiry message may respond in step 510 by transmitting its IMSI. The called party's MS may then notify the responding MS in step 516 that the call will be diverted and initiates call deflection in step 518 specifying the responding stations IMSI. The call is subsequently setup via the MSC serving the responding party's station to the MS in step 520 and 522.

In addition to the steps described above the called party's station may send a message to the responding mobile station notifying that a call directed to the called party is to be diverted (step 512) and the responding party has to enter an access code to generate a message to accept call diversion (step 514).

If more than one MS responds to the enquiry message of step 508, the call may for example be diverted according to a priority list stored in the called party's station. Alternatively, the called party's station may send a short message as described in step 512 above to all responding mobile stations and the call is subsequently diverted to the first party having entered the access code as described in step 514 above.

Similar communications via short-range radio technology may be used to identify mobile stations in the vicinity of the called party's MS to transfer a call or connect one or more third party's mobile stations in a conference call.

Whilst in the above described embodiments the called party's mobile station or a station nearby enquires about other mobile stations via short-range radio links it is to be appreciated that alternatively the calling party's station or any other user terminal participating in a communication via the cellular communications network may send the short-range radio messages to identify other mobile stations in its vicinity. The enquiry for a conference call about other station nearby may for example be carried out by the calling party's station.

In the same manner as described for the call divert service short-range radio communications may be used to implement other services in response to identifying mobile stations. An incoming call may for example ring a central bell and a third party located within the range of the radio link then enters an access code to accept the call.

Whilst in the above described embodiments the call flow is controlled in response to the identification process via the short-range radio links, it is to be appreciated that alternatively a service management function maybe controlled. A user leaving the office and may for example wish to divert incoming calls on his or her mobile station to colleagues which remain in the office. The user may initiate an enquiry message sent to all or group member mobile station which are in the vicinity of his or her station while still being in the office. A responding mobile station may transmit its identification number so that the call diversion or call forwarding can be set in the network, or on the user station, to this responding station to carry out a service management function from the user's station using the received identification number.

### Other Bearer Services

In the above, the bearer services described is voice telephony bearer service. Other bearer services, such as SMS (text messaging), facsimile call, data call, video call, etc., may also benefit from the present invention. In the case of these bearer services, communications over a short range radio link may be triggered in response to incoming telecommunications signals, for example an SMS message or facsimile call establishment signals, automatically by a mobile station or by a user following notification (e.g. by an audio signal, visible display, vibration or otherwise) of the incoming telecommunications signals to user.

### Other Devices

Whilst in the above the use of the mobile stations is described, it is to be appreciated that other devices may be used. Such a device may for example be a home or office appliance such as a personal computer. The device may be telecommunications-enabled, by means of a cellular communications module, a fixed-line telecommunications link, or the like. Although the implementations of the present invention is especially advantageous if at least one of the participating user terminals is mobile, it is to be appreciated that the, or each, user terminal may be a fixed device.

It is to be understood that the embodiments described above are preferred embodiments only. Namely various features may be omitted, modified as substituted by equivalents without departing from the scope of the present invention, which is defined in the accompanying claims.

## Claims

1. A user terminal (310) adapted to be used in a mobile telecommunications network, including:
a cellular radio communications interface;
a short range radio wireless communications interface;
means for communicating via said short-range wireless communications interface in order to identify another device (311; 318); and
means for initiating one or more functions relating to said device (311; 318) in response to said communicating, the one or more functions being initiated in response to an incoming telecommunication signal indicative of an incoming bearer service, said functions being performed at least in part by means of a control message sent over a communications link passing into said network.

2. A user terminal according to claim 1, wherein said one or more functions include controlling a bearer service.

3. A user terminal according to claim 2, wherein said device is another user terminal and said one or more functions include redirecting an incoming call to or from said other user terminal.

4. A user terminal according to claim 1, 2 or 3 wherein said one or more functions include controlling a service management function.

5. A user terminal according to claim 4, wherein said one or more functions include setting a network service setting.

6. A user terminal according to claim 5, wherein said device is another user terminal and said one or more functions include setting call forwarding to or from said other user terminal.

7. A user terminal according to any preceding claim, wherein said communication means comprises means for transmitting an enquiry message and for receiving a response message via said short-range interface.

8. A user terminal according to claim 7, wherein an identifier of the responding user terminal is included in said response.

9. A user terminal according to any preceding claim, wherein said one or more functions are limited to user terminals belonging to a preconfigured group.

10. A user terminal according to claim 9, wherein data identifying members of said preconfigured group are stored on said user terminal.

11. A user terminal according to claim 9, wherein data identifying members of said preconfigured group are stored in the network, remote from the terminal.

12. A user terminal according to any preceding claim, wherein said communications link comprises a cellular radio communications link.

13. A user terminal according to any preceding claim, wherein said short-range interface comprises a short-range radio link, such as a Bluetooth^{™} link.

14. A user terminal according to any preceding claim, wherein said control message is sent from said user terminal via said cellular communications interface.

15. A user terminal according to any of claims 1 to 13, wherein said control message is sent from said device.

16. A method of processing a telephone call in a mobile telecommunications network, said method comprising:
a first user terminal (310) communicating with other user terminals (311; 318) in its vicinity via a short-range link in order to identify at least a second user terminal (311; 318), the communication being initiated in response to an incoming telecommunication signal indicative of an incoming bearer service; and
processing said call in response to said communicating, wherein the call is controlled by an intelligent network process.

17. A method according to claim 16, wherein at least one of said user terminals are mobile.

18. A method according to claim 16 or 17, wherein said first user terminal enquires about an alerting user terminal.

19. A method according to claim 16, 17 or 18, wherein said call processing includes redirecting a call to a receiving user terminal.

20. A method according to claim 19, wherein a calling line identifier is passed to said receiving user terminal when redirecting said call.

21. A method according to claim 19 or 20, wherein said call is redirected including the use of the following supplementary services:
i) call deflection or
ii) call transfer.

22. A method according to any of claims 16 to 21, wherein said call is controlled by an intelligent network process.

23. A method of processing a telephone call in a mobile telecommunications network, said method comprising:
a third party's station sending a short-range message to make an enquiry to other stations within a limited range,
a called party's station answering said enquiry,
said second user terminal answering said enquiry; and
said first user terminal sending a request to said second user terminal by a short-range link to redirect the call from said second user terminal to said first user terminal,
wherein said processing includes redirecting said call from said second user terminal to said first user terminal.

## Patentansprüche

1. Ein Benutzerterminal (310), der angepasst ist, um in einem Mobiltelekommunikationsnetzwerk verwendet zu werden, aufweisend:
eine zelluläre Funkkommunikationsschnittstelle;
eine Kurzstreckenfunkkommunikationsschnittstelle;
Mittel zur Kommunikation über die Kurzstreckenfunkkommunikationsschnittstelle, um eine andere Einheit (311; 318) zu identifizieren; und
Mittel zum Initiieren von einer oder mehreren Funktionen, die sich auf die Einheit (311; 318) beziehen, als Antwort auf die Kommunikation, wobei die eine oder mehrere Funktionen als Antwort auf ein ankommendes Telekommunikationssignal initiiert werden, das auf einen ankommenden Übermittlungsdienst hinweist, wobei die Funktionen zumindest teilweise mittels einer Steuernachricht ausgeführt werden, die über eine Kommunikationsverbindung gesendet wird und in das Netzwerk wandert.

2. Ein Benutzerterminal nach Anspruch 1, wobei die eine oder mehrere Funktionen das Steuern eines Übermittlungsdienstes umfassen.

3. Ein Benutzerterminal nach Anspruch 2, wobei die Einheit ein anderer Benutzerterminal ist und die eine oder mehrere Funktionen das Umleiten eines ankommenden Anrufes zu oder von dem anderen Benutzerterminal umfassen.

4. Ein Benutzerterminal nach Anspruch 1, 2 oder 3, wobei die eine oder mehrere Funktionen das Steuern einer Dienstverwaltungsfunktion umfassen.

5. Ein Benutzerterminal nach Anspruch 4, wobei die eine oder mehrere Funktionen das Einstellen einer Netzwerkdiensteinstellung umfassen.

6. Ein Benutzerterminal nach Anspruch 5, wobei die Einheit ein anderes Benutzerterminal ist und die eine oder mehrere Funktionen das Einstellen einer Anrufweiterleitung zu oder von dem anderen Benutzerterminal umfassen.

7. Ein Benutzerterminal nach einem der vorhergehenden Ansprüche, wobei das Kommunikationsmittel Mittel für das Senden einer Anfrage-Nachricht und für das Empfangen einer Antwort-Nachricht über die Kurzstreckenschnittstelle umfasst.

8. Ein Benutzerterminal nach Anspruch 7, wobei eine Kennung von dem antwortenden Benutzerterminal in der Antwort enthalten ist.

9. Ein Benutzerterminal nach einem der vorhergehenden Ansprüche, wobei die eine oder mehrere Funktionen auf Benutzerterminals begrenzt sind, die zu einer vorkonfigurierten Gruppe gehören.

10. Ein Benutzerterminal nach Anspruch 9, wobei Daten, die Mitglieder der vorkonfigurierten Gruppe identifizieren, auf dem Benutzerterminal gespeichert sind.

11. Ein Benutzerterminal nach Anspruch 9, wobei Daten, die Mitglieder der vorkonfigurierten Gruppe identifizieren, in dem Netzwerk, entfernt von dem Terminal, gespeichert sind.

12. Ein Benutzerterminal nach einem der vorhergehenden Ansprüche, wobei die Kommunikationsverbindung eine zelluläre Funkkommunikationsverbindung umfasst.

13. Ein Benutzerterminal nach einem der vorhergehenden Ansprüche, wobei die Kurzstreckenschnittstelle eine Kurzstreckenfunkverbindung umfasst, wie beispielsweise eine Bluetooth^{™}-Verbindung.

14. Ein Benutzerterminal nach einem der vorhergehenden Ansprüche, wobei die Steuernachricht von dem Benutzerterminal über die zelluläre Kommunikationsschnittstelle gesendet wird.

15. Ein Benutzerterminal nach einem der Ansprüche 1-13, wobei die Steuernachricht von der Einheit gesendet wird.

16. Ein Verfahren zur Verarbeitung eines Telefonanrufes in einem mobilen Telekommunikationsnetzwerk, wobei das Verfahren umfasst:
einen ersten Benutzerterminal (310), der mit einem anderen Benutzerterminal (311; 318) in seiner Nähe über eine Kurzstreckenverbindung kommuniziert, um zumindest einen zweiten Benutzerterminal (311; 318) zu identifizieren, wobei die Kommunikation als Antwort auf ein ankommendes Telekommunikationssignal initiiert wird, das auf einen ankommenden Übermittlungsdienst hinweist; und
Verarbeitung des Anrufs als Antwort auf die Kommunikation, wobei der Anruf von einem intelligenten Netzwerkprozess gesteuert wird.

17. Ein Verfahren nach Anspruch 16, wobei zumindest einer der Benutzerterminals mobil ist.

18. Ein Verfahren nach Anspruch 16 oder 17, wobei der erste Benutzerterminal eine Anfrage über einen alarmierenden Benutzerterminal stellt.

19. Ein Verfahren nach Anspruch 16, 17 oder 18, wobei ein Umleiten eines Anrufes zu einem empfangenen Benutzerterminal von der Anrufverarbeitung umfasst ist.

20. Ein Verfahren nach Anspruch 19, wobei eine Anrufsverbindungskennung zu dem empfangenen Benutzerterminal weitergeführt wird, wenn der Anruf umgeleitet wird.

21. Ein Verfahren nach Anspruch 19 oder 20, wobei das Umleiten des Anrufs die Verwendung der folgenden ergänzenden Dienste umfasst:
i) Anrufweiterschaltung oder
ii) Anrufumlegung.

22. Ein Verfahren nach einem der Ansprüche 16-21, wobei der Anruf von einem intelligenten Netzwerkprozess gesteuert wird.

23. Ein Verfahren nach einem der Ansprüche 16-22, wobei die Kommunikation umfasst:
den ersten Benutzerterminal, der eine Kurzstreckennachricht sendet, um eine Anfrage an andere Stationen innerhalb einer begrenzten Strecke zu stellen;
den zweiten Benutzerterminal, der die Anfrage beantwortet; und
den ersten Benutzerterminal, der eine Aufforderung zu dem zweiten Benutzerterminal über eine Kurzstreckenverbindung sendet, um den Anruf von dem zweiten Benutzerterminal zu dem ersten Benutzerterminal umzuleiten,
wobei die Verarbeitung ein Umleiten des Anrufs von dem zweiten Benutzerterminal zu dem ersten Benutzerterminal umfasst.

## Revendications

1. Terminal utilisateur (310) destiné à être utilisé dans un réseau de télécommunications mobile, comprenant :
une interface de radiocommunication cellulaire ;
une interface de radiocommunication sans fil à courte distance ;
des moyens permettant de communiquer par l'intermédiaire de l'interface de communication sans fil à courte distance afin d'identifier un autre dispositif (311, 318) ; et
des moyens permettant d'initier une ou plusieurs fonctions associées audit dispositif (311, 318) en réponse à ladite communication, la une ou les plusieurs fonctions étant initiées en réponse à un signal de télécommunication entrant indiquant un service support entrant, lesdites fonctions étant exécutées au moins en partie au moyen d'un message de commande envoyé sur une liaison de communication passant dans ledit réseau.

2. Terminal utilisateur selon la revendication 1, dans lequel ladite une fonction ou lesdites plusieurs fonctions comprennent la commande d'un service support.

3. Terminal utilisateur selon la revendication 2, dans lequel ledit dispositif est un autre terminal utilisateur et ladite une ou lesdites plusieurs fonctions comprennent la redirection d'un appel entrant vers et depuis ledit autre terminal utilisateur.

4. Terminal utilisateur selon la revendication 1, 2 ou 3, dans lequel ladite une ou lesdites plusieurs fonctions comprennent la commande d'une fonction de gestion de service.

5. Terminal utilisateur selon la revendication 4, dans lequel ladite une ou lesdites plusieurs fonctions comprennent la configuration de configurations de service réseau.

6. Terminal utilisateur selon la revendication 5, dans lequel ledit dispositif est un autre terminal utilisateur et ladite une ou lesdites plusieurs fonctions comprennent la configuration d'un réacheminement d'appel vers ou depuis ledit autre terminal utilisateur.

7. Terminal utilisateur selon l'une quelconque des revendications précédentes, dans lequel lesdits moyens de communication comprennent des moyens pour transmettre un message de requête et pour recevoir un message de réponse par l'intermédiaire de ladite interface à courte distance.

8. Terminal utilisateur selon la revendication 7, dans lequel un identifiant du terminal utilisateur répondant est compris dans ladite réponse.

9. Terminal utilisateur selon l'une quelconque des revendications précédentes, dans lequel ladite une ou lesdites plusieurs fonctions sont limitées à des terminaux utilisateur appartenant à un groupe préconfiguré.

10. Terminal utilisateur selon la revendication 9, dans lequel des éléments d'identification de données, dudit groupe préconfiguré sont mémorisés sur ledit terminal utilisateur.

11. Terminal utilisateur selon la revendication 9, dans lequel les éléments d'identification de données dudit groupe préconfiguré sont mémorisés dans le réseau, à distance du terminal.

12. Terminal utilisateur selon l'une quelconque des revendications précédentes, dans lequel ladite liaison de communication comprend une liaison de radiocommunication cellulaire.

13. Terminal utilisateur selon l'une quelconque des revendications précédentes, dans lequel ladite interface à courte distance comprend une liaison radio à courte distance, telle qu'une liaison Bluetooth^{™}.

14. Terminal utilisateur selon l'une quelconque des revendications précédentes, dans lequel ledit message de commande est envoyé dudit terminal utilisateur par l'intermédiaire de ladite interface de communications cellulaire.

15. Terminal utilisateur selon l'une quelconque des revendications 1 à 13, dans lequel ledit message de commande est envoyé depuis ledit dispositif.

16. Procédé de traitement d'un appel téléphonique dans un réseau de télécommunications mobile, ledit procédé comprenant les étapes suivantes :
un premier terminal utilisateur (310) entre en communication avec d'autres terminaux utilisateur (311, 318) à proximité de celui-ci par l'intermédiaire d'une liaison à courte distance afin d'identifier au moins un second terminal utilisateur (311, 318), la communication étant initiée en réponse à un signal de télécommunication entrant indiquant un service support entrant ; et
ledit appel est traité en réponse à ladite communication, dans lequel l'appel est commandé par un traitement de réseau intelligent.

17. Procédé selon la revendication 16, dans lequel au moins l'un desdits terminaux utilisateur est mobile.

18. Procédé selon la revendication 16 ou 17, dans lequel ledit premier terminal utilisateur effectue une requête concernant un terminal utilisateur donnant une alerte.

19. Procédé selon la revendication 16, 17 ou 18, dans lequel ledit traitement d'appel comprend la redirection d'un appel vers un terminal utilisateur de réception.

20. Procédé selon la revendication 19, dans lequel un identifiant de ligne appelante est transmis audit terminal utilisateur de réception lors de la redirection dudit appel.

21. Procédé selon la revendication 19 ou 20, dans lequel ledit appel est redirigé en comprenant l'utilisation des services supplémentaires suivants :
i) déviation d'appel ou
ii) transfert d'appel.

22. Procédé selon l'une quelconque des revendications 16 à 21, dans lequel ledit appel est commandé par un traitement de réseau intelligent.

23. Procédé selon l'une quelconque des revendications 16 à 22, dans lequel ladite étape de communication comprend les étapes suivantes :
ledit premier terminal utilisateur envoie un message à courte distance pour présenter une requête à d'autres postes à une distance limitée ;
ledit second terminal utilisateur répond à ladite requête ; et
ledit premier terminal utilisateur envoie une requête audit second terminal utilisateur par l'intermédiaire d'une liaison à courte distance pour rediriger l'appel dudit second terminal utilisateur audit premier terminal utilisateur,
dans lequel ledit traitement comprend la redirection dudit appel dudit second terminal utilisateur au dit premier terminal utilisateur.
